# EUROPEAN PATENT APPLICATION

(11) **EP 4 167 011 A1**
(43) Date of publication of application: **19.04.2023**
(21) Application number: 21202362.6
(22) Date of filing: 13.10.2021
(51) Int. Cl.: G02B 21/06

(54) **LIGHT MODULATION DEVICE FOR A MICROSCOPE, MICROSCOPE AND METHOD FOR MODULATING A LIGHT BEAM**

(71) Applicant: Abberior Instruments GmbH, 37077 Göttingen (DE)
(72) Inventor: HARKE, Benjamin, 37083 Göttingen (DE)

(57) **Abstract**

The invention relates to a light modulation device (1) for a microscope (100) comprising a first active area (11) of a wavefront modulator (10,10a) and a second active area (12) of a wavefront modulator (10,10b), wherein the first active area (11) and the second active area (12) are configured to modulate a wavefront of a light beam (L) dependent on a polarization of the light beam (L), wherein the first active area (11) and the second active area (12) intersect a light path along which the light beam (L) propagates, wherein the light modulation device (1) comprises a first polarization switching element (20) configured to rotate the polarization of the light beam (L) between a first polarization direction (P1) and a second polarization direction (P2) upon receiving a switching signal (S) to selectively modulate the wavefront of the light beam (L) by the first active area (11) and/or the second active area (12). The invention further relates to a microscope (100) comprising the light modulation device (1) and a method for modulating a light beam (L) for microscopy.

## Description

### Technical area of the invention

The invention relates to a light modulation device for a microscope, a microscope comprising the light modulation device and a method for modulating a light beam for microscopy. The microscope and the light beam may be used for microscopic imaging of a sample or for microscopic localization of single molecules or particles in a sample. The light modulation device modulates the wavefront (e.g., the phase or amplitude distribution) of the light beam, e.g., to shape and/or position the light beam, particularly a focus of the light beam.

### Prior art

Wavefront modulation has been used for various purposes in microscopy. For example, the phase distribution of a STED (stimulated emission depletion) light beam can be adjusted in a in a pupil plane of the objective, such that a light distribution with a central intensity minimum is generated at the focus of the light beam. In the presence of additional excitation light, actively emitting fluorophores in the observed sample can be confined to a central region of the donut which is significantly smaller than the diffraction limit. In this manner, super-resolution can be achieved. A similar approach is used in MINFLUX microscopy to generate a hollow focus of excitation light (F. Balzarotti et. al., "Nanometer resolution imaging and tracking of fluorescent molecules with minimal photon fluxes", https://arxiv.org/abs/1611.03401). During MINFLUX, the intensity minimum of this focus is moved in a pattern relative to the sample in the vicinity of a single fluorophore (which has been identified and localized with lower precision using an independent localization method), and fluorescence photon counts are recorded for each position of the pattern. A position estimate of the fluorophore can then be determined from the photon counts and the corresponding positions. When applied iteratively, this procedure can achieve localization accuracies in the range of 1-2 nm, i.e., molecular resolution.

Suitable wavefront modulators for the described applications include transmissive phase filters (phase plates) with a fixed phase pattern and spatial light modulators, e.g., comprising pixels with programmable phase values.

In certain instances, it is desirable to illuminate the sample simultaneously or in fast succession with two or more light distributions of different shapes.

For example, in STED microscopy, lateral as well as axial resolution can be improved by combining two incoherent STED foci, a donut and a bottle-beam (also referred to herein as '3D donut'). Whereas a donut is characterized by a very sharp intensity minimum in the lateral direction (improving lateral resolution), a bottle beam, which comprises areas of high STED intensity above and below the focus, advantageously improves axial resolution.

An optical setup to generate such a combination of different STED foci using a single spatial light modulator has been described by M. Lenz et al.: '3-D stimulated emission depletion microscopy with programmable aberration correction' J Biophotonics 7, No. 1-2, 29-36 (2014).

In this method, a STED beam is separated into two orthogonally polarized incoherent beams using a polarization-maintaining single mode fiber, and the two beams are subsequently projected onto two separate active areas of a spatial light modulator displaying different phase patterns. The first active area is imaged onto the second active area by focusing the beam emerging from the first active area onto a mirror in a 2F configuration relative to the surface of the spatial light modulator. A quarter-wave plate positioned in the beam path between the spatial light modulator and the mirror is passed twice by the light beam to rotate the polarization by 90°. In this manner, the component of the beam initially matching the polarization sensitive pattern of the first active area is modulated by the first active area, and its polarization is subsequently rotated by 90°, such that its wavefront is unaffected by the second active area. Vice versa, the other component is not modulated by the first active area since its polarization does not match the pattern on the first active area but is modulated by the second active area after passing the quarter-wave plate. By imaging the two areas of the spatial light modulator onto each other, a lateral shift between the two light beams due to diffraction on the blazed grating of the spatial light modulator is compensated, such that the partial beams are perfectly aligned. By an appropriate adjustment of the phase patterns of the spatial light modulator, aberrations can be corrected in parallel with beam shaping.

An alternative system using exclusively collimated beams is described in DE 10 2014 113 716 A1. Here, two orthogonally polarized beam components are also projected on two separate active areas of a spatial light modulator displaying different phase-modulating patterns. However, a reflective substrate attached to a quarter wave plate is placed closely to the spatial light modulator without any focusing optics in between, which results in a less error-prone and highly compact design. Although a lateral shift between the two components occurs in this setup, the shift is very small due to the close distance between the mirror and the active surface of the spatial light modulator. In addition, the remaining lateral shift can be compensated by adjusted phase patterns.

Another embodiment described in DE 10 2014 113 716 A1 consists of two transmissive phase filters displaying the phase patterns to construct a donut and a bottle beam from the two components of the light beam and a half-wave plate arranged between the phase filters to rotate the polarization by 90° as described above.

DE 10 2014 113 716 A1 further mentions that the quarter wave plate or half wave plate can be completely omitted if the phase filters have crossed polarization directions.

However, a further advantage of rotating the polarization between the two active areas is that a chromatic quarter-wave plate or half-wave plate can be used. In this manner, the beam path including the spatial light modulator can be used for a further beam of different wavelength (e.g., an excitation beam), which is not polarization-rotated by the chromatic quarter-wave or half-wave plate. If this beam initially has a polarization not matching the spatial light modulator, it is unaffected by both the first active area and the second active area.

Switching between different beam shapes has been described, e.g., for a variant of 3D MINFLUX microscopy (K.C. Gwosch et al.: "MINFLUX nanoscopy delivers 3D multicolor nanometer resolution in cells", Nature Methods 17, 217-224 (2020). In this method, a single fluorophore is pre-localized by moving a Gaussian-shaped excitation beam over the sample in a pre-defined pattern, followed by a high-accuracy localization using a 3D donut.

WO 2020/198487 A1 describes a method, in which a reference signal for background correction in STED microscopy is obtained by providing additional light intensity at the central minimum of a donut-shaped STED focus. This is achieved by altering the circular polarization of the light beam in front of the objective lens.

In many applications in microscopy, fast switching of beam shapes would be desirable. Switching by mechanical actuation of parts is too slow for many purposes. Using programmable spatial light modulators, it is possible to alter the displayed phase patterns in time, but switching speeds are limited to the millisecond time range, which is still too slow for many purposes.

### Objective problem

Therefore, the objective of the present invention is to provide a light modulation device for a microscope which can switch between different wavefront modulation patterns at high speed.

### Solution

This objective is attained by the light modulation device according to claim 1, the microscope according to claim 14 and the method according to claim 15. Favorable embodiments of the invention are specified in dependent claims 2 to 13 and described hereafter.

### Description of the invention

A first aspect of the invention relates to a light modulation device for a microscope comprising a first active area of a wavefront modulator and a second active area of a wavefront modulator. The first active area and the second active area are either comprised in a single wavefront modulator, or the first active area is comprised in a first wavefront modulator and the second active area is comprised in a second wavefront modulator. In particular, the first active area and the second active area are non-overlapping.

The first active area and the second active area are configured to modulate a wavefront of a light beam, particularly a linearly polarized light beam, dependent on the polarization of the light beam. In other words, the first active area and the second active area modulate the wavefront of a component of the light beam polarized in a preferred direction, but do not modulate a component of the light beam which is polarized orthogonally to the preferred direction.

Modulating the wavefront of the light beam particularly comprises modulating a spatial phase distribution and/or a spatial amplitude distribution of the light beam. In case the phase distribution of the light beam is modulated, the first active area and the second active area are particularly arranged in a plane which is conjugated to a pupil plane of an objective lens of a microscope, which focuses the light beam into or onto a sample.

In particular, to achieve a modulation of its wavefront, the light beam may be diffracted, reflected or transmitted by the first active area and the second active area.

In particular, the light beam is linearly polarized. If, e.g., the polarization of the light beam matches the preferred direction of the first active area when reaching the first active area but is orthogonal to the preferred direction of the second active area when reaching the second active area, the wavefront of the light beam is selectively modulated by the first active area.

A light path, along which the light beam propagates, intersects the first active area and the second active area. That is, e.g., the first active area and the second active area may be arranged on an optical axis of the light beam, particularly in case the first active area and the second active area are formed by transmissive wavefront-modulating elements, such as phase plates. Alternatively, particularly in case the first and second active areas are formed by diffractive or reflective surfaces, a mirror or similar reflective element may be provided in the light path between the first active area and the second active area to direct the light beam along the light path.

In the light path between the first active area and the second active area, the light beam may be focused (e.g., to a mirror to image the first active area and the second active area onto each other as described, e.g., in the prior art document M. Lenz et al.: '3-D stimulated emission depletion microscopy with programmable aberration correction' J Biophotonics 7, No. 1-2, 29-36 (2014)), or the light beam may be collimated in the light path between the first active area and the second active area as described, e.g., in the prior art document DE 10 2014 113 716 A1.

The light modulation system comprises a first polarization switching element configured to rotate the polarization of the light beam between a first polarization direction and a second polarization direction upon receiving a switching signal to selectively modulate the wavefront of the light beam by the first active area and/or the second active area.

In particular, the first polarization direction is perpendicular to the second polarization direction. This has the advantage that the wavefront of a light beam which is linearly polarized in the first direction is only modulated by the first active area but completely unaffected by the second active area, and vice versa.

E.g., the light beam may be initially linearly polarized, such that its wavefront will be modulated by the first active area, but not by the second active area. Upon providing a switching signal to the first polarization switching element, the polarization of the light beam may be rotated by a desired angle (e.g., 90°), such that the light beam is unaffected by the first active area, but such that its wavefront is modulated by the second active area.

By means of the first polarization switching element, the polarization of the light beam can be adjusted quickly to selectively achieve wavefront modulation of the light beam by the pattern displayed on the first active area or the second active area of the wavefront modulator. Thereby, switching between different beam shapes may be achieved on a time scale which is much faster than an actuation of movable parts or re-programming of a spatial light modulator.

For example, in scanning microscopy this concept may be applied to switch between different beam shapes line by line or even pixel by pixel. If the phase or amplitude patterns displayed on the first active area and the second active area are adjustable (such as e.g., in case of a phase-modulating spatial light modulator comprising programmable pixels), the device can be applied to quickly switch between arbitrary beam shapes for various applications.

In certain embodiments, the first polarization switching element is an electro-optic device (e.g., a Pockels cell, which rotates the polarization of the light beam due to the electro-optic effect.

Advantageously, such electro-optic devices allow very fast switching and/or allow an adjustment of the angle of polarization rotation.

In certain embodiments, the first active area is configured to modulate the wavefront of the light beam if the light beam is polarized in the first polarization direction and the second active area is configured to modulate the wavefront of the light beam if the light beam is polarized in the second polarization direction. In other words, the first active area and the second active area have different preferential directions. This can be achieved either by two separate wavefront modulators or by a single wavefront modulator having two surfaces of different polarization selectivity. In particular, the first polarization direction is perpendicular to the second polarization direction.

In certain embodiments, the light modulation device comprises a polarization modifying element (e.g., a half wave plate, a quarter wave plate or an electrooptical element) configured to rotate the polarization of the light beam, particularly by 90°, wherein the polarization modifying element is arranged in the light path between the first active area and the second active area.

According to this embodiment, the light beam may be selectively modulated by the first and the second active area, even if the first and the second active area have the same preferential polarization direction. Therefore, the first active area and the second active area may be provided as partial areas of a single active surface of a single wavefront modulator, which results in a reduction of costs and complexity of the system.

In certain embodiments, the polarization modifying element is configured to rotate the polarization of the light beam in a wavelength dependent manner.

In other words, the polarization modifying element is chromatic. By means of a chromatic polarization modifying element, a further light beam of an appropriate wavelength may be used in parallel to the light beam in the same beam path, while the wavefront of the further light beam is unaffected (i.e., not modulated) by the first and the second active area.

In certain embodiments, the polarization modifying element is a passive polarization modifying element, particularly a half wave plate, which is passed once by the light beam between the first active area and the second active area or a quarter wave plate, which is passed twice by the light beam between the first active area and the second active area. A passive polarization modifying element in the meaning used in the present specification modifies the polarization of the light beam without applying a (e.g., electric) switching signal.

In certain embodiments, the polarization modifying element is an active polarization modifying element, particularly an electrooptic element, such as e.g., a Pockels cell. The term 'active polarization modifying element' as used herein describes a polarization modifying element which rotates the polarization of the light beam upon receiving a switching signal.

In certain embodiments (particularly in case the light modulation device comprises a polarization modifying element in the light path between the first active area and the second active area, as described above) both the first active area and the second active area are configured to modulate the wavefront of the light beam if the light beam is polarized in the first polarization direction. In certain embodiments, both the first active area and the second active area are configured to modulate the wavefront of the light beam if the light beam is polarized in the second polarization direction. In particular, the first active area and the second active area are jointly formed by a single wavefront modulator.

In certain embodiments, the light modulation device comprises a second polarization switching element configured to rotate the polarization of the light beam between the second polarization direction and the first polarization direction (e.g., back from the second polarization direction to the first polarization direction) after the wavefront of the light beam has been modulated by the first active area and/or the second active area.

In certain embodiments, the first polarization switching element and/or the second polarization switching element comprises a switching rate of at least 1 kHz, particularly at least 2 kHz, more particularly at least 5 kHz.

In certain embodiments, the first polarization switching element and/or the second polarization switching element is an electro optic device, particularly a Pockels cell.

In certain embodiments, the first active area and the second active area are comprised in a spatial light modulator comprising a plurality of adjustable pixels.

In certain embodiments, the polarization modifying element is a λ/2 plate configured such that the light beam is transmitted once by the λ/2 plate, or the polarization modifying element is a λ/4 plate configured such that the light beam is transmitted twice by the λ/4 plate.

In certain embodiments, the first active area is configured to display a first modulation pattern and the second active area is configured to display a second modulation pattern. When the light beam is transmitted, reflected or diffracted by the first or second active area, the modulation pattern results in a wavefront modulation of the light beam.

In certain embodiments, the light modulation device comprises a control device configured to control the first active area and the second active area, such that the first active area displays the first modulation pattern, and the second active area displays the second modulation pattern. This is possible, e.g., using a spatial light modulator with controllable pixels.

In certain embodiments, the first modulation pattern and the second modulation pattern are adapted to adjust an axial position of a focus of the light beam. The focus is particularly generated by an objective lens of a microscope. E.g., in case the first and second modulation patterns modulate the phase distribution of the light beam, a defocus may be introduced to the light beam by the first and/or the second modulation pattern in a similar manner to aberration correction as described in the prior art. Specifically, the first and/or the second modulation pattern may be a phase pattern reflecting a Zernike polynomial describing a defocus aberration. A defocus may be introduced by one of the modulation patterns, whereas the other modulation pattern particularly does not affect the phase and/or amplitude distribution of the light beam, or the first and the second modulation pattern may introduce defoci of different extent, resulting in a shift of the focus.

The resulting shift of the axial focus position may be used, e.g., in 3D scanning of a sample with the light beam, e.g., in confocal laser scanning microscopy, or to move a local minimum of a light distributions between different positions forming a 3D pattern (such as in 3D MINFLUX microscopy).

In certain embodiments, the first modulation pattern and the second modulation pattern are adapted, such that the wavefront of the light beam is modulated in an identical fashion regardless of the polarization of the light beam. In particular, the first modulation pattern and the second modulation pattern may be identical (or identical except for additional corrections of a lateral shift or aberrations) according to this embodiment.

This embodiment may be used, e.g., in microscopic applications, in which polarization switching is used for other purposes (e.g., guiding the light beam along different light paths by polarizing beam splitters) to ensure that an identical beam shape is achieved regardless of the polarization direction.

In certain embodiments, at least one of the first modulation pattern and the second modulation pattern is adapted to generate a light distribution comprising a local intensity minimum at a focus of the light beam. An example of such a light distribution is a donut (2D donut) or a bottle beam (3D donut), as known, e.g., from STED and MINFLUX microscopy. A typical 2D donut can be generated, e.g., by a vortex-shaped phase pattern in a plane conjugated to the objective pupil running gradually from phase values of zero to 2π. A bottle beam can be constructed by a top-hat shaped phase pattern in a pupil-conjugated plane. The light beam may be additionally circularly polarized (e.g., by a λ/4 plate behind the objective lens) to generate these light distributions.

In certain embodiments, the first modulation pattern is adapted to generate a light distribution comprising a local intensity maximum at a focus of the light beam, particularly a Gaussian shaped light distribution and the second modulation pattern is adapted to generate the light distribution comprising the local intensity minimum at the focus, particularly a donut-shaped light distribution or a bottle beam shaped light distribution. In particular, a Gaussian shaped light distribution can be achieved by a regularly focused beam. In this case, the first modulation pattern is particularly a 'null pattern' which does not modulate the phase distribution of the light beam.

For example, switching between an excitation light distribution comprising a local maximum and an excitation light distribution comprising a local minimum may be applied in MINFLUX microscopy to switch between pre-localization of a fluorophore using, e.g., a Gaussian shaped light distribution as described in the prior art, and a MINFLUX localization sequence using, e.g., a donut-shaped light distribution.

In certain embodiments, the first modulation pattern is adapted to generate a first light distribution, and the second modulation pattern is adapted to generate a second light distribution, wherein both the first light distribution and the second light distribution comprise a local minimum at a focus of the light beam, wherein the first light distribution is different from the second light distribution, wherein particularly the first light distribution is donut-shaped and the second light distribution is bottle beam shaped.

In this manner, e.g., fast switching between a 2D donut and a 3D donut in STED microscopy can be achieved.

In certain embodiments, the first light distribution and the second light distribution each comprise a low-intensity region including and/or surrounding the local intensity minimum, wherein a light intensity is below a threshold value in the low-intensity region, and wherein a volume of the low-intensity region of the first light distribution is different, particularly by 10 % or more, from the volume of the low-intensity region of the second light distribution.

In other words, one of the light distributions comprises a broader region of low intensity compared to the other distribution, e.g., due to a different steepness of the intensity distribution adjacent to the local intensity minimum.

For instance, 2D donuts of different broadness can be achieved by displaying a phase pattern in a pupil-conjugated plane running from phase values between zero and different even multiples of π (e.g., 2π, 4π, 6π, 8π, or 10π).

Whereas in STED microscopy, the region of low intensity around the minimum of the STED light distribution should be as small as possible to optimize spatial resolution, a broader distribution may be preferred in other applications, such as, e.g., MINFLUX microscopy in an envelope of STED light to reduce background fluorescence. Using the described embodiment, e.g., fast switching between STED light distributions of different 'broadness' can be achieved.

In certain embodiments, the at least one of the first light distribution and the second light distribution comprises additional light intensity at the local minimum (wherein the term 'additional' is meant relative to the other light distribution).

E.g., additional light intensity at the local minimum of a 2D donut-shaped light distribution can be achieved, e.g., by introducing a slight disturbance of a vortex-shaped phase pattern leading to imperfect destructive interference at the focus.

This additional light intensity at the minimum can be applied to obtain a reference signal for background correction in STED microscopy, as described, e.g., in WO 2020/198487 A1. Fast switching between the regular STED distribution and the 'reference distribution' is highly desirable in this application, to perform background correction during scanning over the sample, e.g., line-wise or pixel-wise.

A second aspect of the invention relates to a microscope, particularly a light microscope, more particularly a super resolution microscope, comprising a light modulation device according to the first aspect. A super resolution microscope is a light microscope configured to a achieve a resolution below the diffraction limit of light.

In certain embodiments, the microscope comprises a light source configured to provide the light beam, an objective lens configured to focus the light beam into or onto a sample, and a detector configured to detect light emanating from the sample (e.g., light reflected by particles in the sample or luminescence, e.g., fluorescence light generated by emitters in the sample in response to excitation light).

In certain embodiments, the microscope comprises a first light source configured to illuminate the sample with excitation light (to excite emitters in the sample) and/or a second light source configured to illuminate the sample with depletion light (to deplete luminescence of the emitters, e.g., by STED). In particular, the microscope comprises a wavefront modulator configured to generate a light distribution of the excitation light and/or the depletion light comprising a local intensity minimum at the focus.

In certain embodiments, the microscope comprises a scanner configured to move the focus of the light beam through or over the sample.

In certain embodiments, the microscope comprises a wavefront modulator configured to generate an excitation light distribution comprising a local minimum at the focus, a deflection device, particularly an electro optic deflection device or an acousto optic deflection device, configured to move the minimum of the excitation light distribution through or over the sample in a pattern, and a processing device configured to estimate a position of a single emitter in the sample based on a plurality of detection signals (e.g., photon counts) obtained by the detector at respective positions of the minimum and the corresponding positions of the minimum. Such a microscope is also designated 'MINFLUX microscope' herein, and the corresponding method is termed 'MINFLUX microscopy'.

A third aspect of the invention relates to a method for modulating a light beam for microscopy, particularly using the light modulation device according to the first aspect and/or the microscope according to the second aspect, wherein a light beam, particularly a linearly polarized light beam, is provided, and the light beam is directed along a light path intersecting a first active area of a wavefront modulator and a second active area of a wavefront modulator, particularly non-overlapping with the first active area, wherein the first active area and the second active area are configured to modulate a wavefront of the light beam dependent on a polarization of the light beam.

The polarization of the light beam is rotated between a first polarization direction and a second polarization direction upon receiving a switching signal to selectively modulate the wavefront of the light beam by the first active area and/or the second active area, wherein particularly the first polarization direction is perpendicular to the second polarization direction.

In certain embodiments, the method comprises (particularly after modulating the wavefront by the first active area and before modulating the wavefront by the second active area) rotating the polarization of the light beam, particularly by 90°.

In certain embodiments, a first modulation pattern is displayed by the first active area and/or a second modulation pattern is displayed by the second active area.

In certain embodiments, an axial position of a focus of the light beam is adjusted by the first modulation pattern and/or the second modulation pattern.

In certain embodiments, the wavefront of the light beam is modulated in an identical fashion by the first modulation pattern and the second modulation pattern regardless of the polarization of the light beam.

In certain embodiments, a light distribution comprising a local intensity minimum at a focus of the light beam is generated by the first modulation pattern and/or the second modulation pattern

In certain embodiments, a light distribution comprising a local intensity maximum at the focus, particularly a Gaussian shaped light distribution, is generated by the first modulation pattern and a light distribution comprising the local intensity minimum at the focus, particularly a donut-shaped light distribution or a bottle beam shaped light distribution, is generated by the second modulation pattern.

In certain embodiments, a first light distribution is generated by the first modulation pattern and a second light distribution is generated by the second modulation pattern, wherein both the first light distribution and the second light distribution comprise a local minimum at the focus, wherein the first light distribution is different from the second light distribution, wherein particularly the first light distribution is donut-shaped and the second light distribution is bottle beam shaped.

In certain embodiments, the first light distribution and the second light distribution each comprise a low-intensity region including and/or surrounding the local intensity minimum, wherein a light intensity is below a threshold value in the low-intensity region, and wherein a volume of the low-intensity region of the first light distribution is different, particularly by 10 % or more, from the volume of the low-intensity region of the second light distribution.

In certain embodiments, the at least one of the first light distribution and the second light distribution comprises additional light intensity at the local minimum.

Further favorable embodiments of the method and the microscope according to the invention have already been mentioned in the context of the light modulation device according to the invention.

Further embodiments of the invention may be derived from the claims, the description and the drawings. Therein, the claims are not to be construed in a manner such that only subjects, devices or methods respectively comprising all or none of the features of a sub claim in addition to the features of the independent claims 1, 14 and 15, may be possible embodiments of the invention. In contrast, further embodiments may be drawn from features stated in the description or derivable from the drawings which may be singly or cumulatively applied.

### Short description of the figures

The invention is further elucidated and described hereafter with reference to the exemplary embodiments displayed in the figures. These embodiments are non-restrictive examples which are not meant to limit the scope of the invention.
- **Fig. 1**: shows a first embodiment of the light modulation device according to the invention comprising a single spatial light modulator comprising two active areas of identical polarization sensitivity and a polarization modifying element;
- **Fig. 2**: shows a second embodiment of the light modulation device according to the invention comprising two spatial light modulators comprising active areas of orthogonal polarization sensitivities;

- **Fig. 3**: shows a third embodiment of the light modulation device according to the invention comprising two transmissive phase filters having the same polarization sensitivity and a polarization modifying element;
- **Fig. 4**: shows a fourth embodiment of the light modulation device according to the invention comprising two transmissive phase filters having orthogonal polarization sensitivities;
- **Fig. 5**: shows a first embodiment of the microscope according to the invention;
- **Fig. 6**: shows a second embodiment of the microscope according to the invention, particularly a MINFLUX microscope.

### Description of the figures

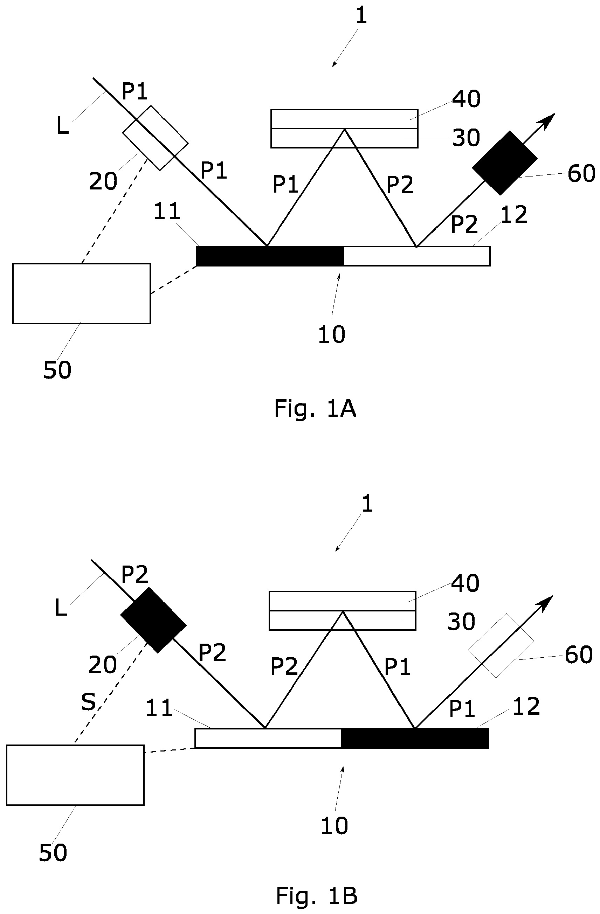

**Fig. 1** shows a first embodiment of the light modulation device 1 according to the invention. Fig. 1A and Fig. 1B show alternative states of the light modulation device 1.

The light modulation device 1 comprises a wavefront modulator 10, particularly a spatial light modulator with a plurality of pixels having programmable phase values (retardance values). A blazed grating is encoded by the pixels of the spatial light modulator to diffract the light beam L while modulating the phase distribution of the light beam L (particularly the first order diffracted beam). For instance, such spatial light modulators may operate based on birefringent nematic liquid crystals which can be oriented by an electric field. An active, light-modulating surface of the spatial light modulator comprising the programmable pixels is divided into a first active area 11 and a second active area 12 which may display separate phase patterns, for example. The wavefront modulator 10 is connected to a control device 50 which may be configured to adjust the retardance values of the pixels to display variable phase patterns on the first active area 11 and the second active area 12. According to the example depicted in Fig. 1, both the first active area 11 and the second active area 12 have the same polarization sensitivity in the first polarization direction P1. In other words, only light which is polarized in the first polarization direction P1 is wavefront-modulated.

The light beam L, which is initially linearly polarized in the first polarization direction P1, passes through a first polarization switching element 20 (e.g., a Pockels cell) connected to the control device 50. In **Fig. 1A****,** the first polarization switching element 20 is inactive, such that the polarization of the light beam L is not rotated by the first polarization switching element 20. Thus, the light beam L is still linearly polarized in the first polarization direction P1 when the light beam L hits the first active area 11. Consequently, the wavefront of the diffracted light beam L is modulated by the first active area 11 (schematically indicated by depicting the first active area 11 in solid black).

Subsequently, the diffracted light beam L is reflected by a reflective element 40 (e.g., a mirror) onto the second active area 12. A polarization modifying element 30, e.g., a λ/4 plate, is attached to the reflective element 40, and is passed twice by the light beam L between the first active area 11 and the second active area 12. Thereby, the polarization of the light beam L is rotated by 90° from the first polarization direction P1 to the second polarization direction P2. The polarization modifying element 30 may be chromatic, i.e., may rotate the polarization of a light beam L in a wavelength-dependent manner.

Since the second polarization direction P2 is orthogonal to the preferential polarization direction of the first and the second active area 11,12, the wavefront of the rotated light beam L is not further modulated by the second active area 12.

In the configuration shown in **Fig. 1B**, the first polarization switching element 20 receives a switching signal S from the control device 50, such that the first polarization switching element 20 rotates the polarization of the light beam L from the first polarization direction P1 to the second polarization direction P2. Activation of the first polarization switching element 20 is indicated in Fig. 1B by the solid black color of the symbol.

The polarization of the light beam L thus does not match the polarization selectivity of the wavefront modulator 10 when the light beam L reaches the first active area 11, and consequently, the wavefront of the light beam L is unaffected by the first active area 11. By rotation by the polarization modifying element 30, however, the light beam L is subsequently polarized in the first polarization direction P1 when the light beam L reaches the second active area 12. Therefore, the wavefront of the light beam L is modulated by the second active area 12.

An optional second polarization switching element 60 (e.g., a second Pockels cell) may be provided in the light path after the wavefront modulator 10 to rotate the polarization of the light beam L back to the first polarization direction P1, e.g., in case the polarization is important for downstream applications. Triggering of the second polarization switching element 60 may be synchronized with the activation of the first polarization switching element 20.

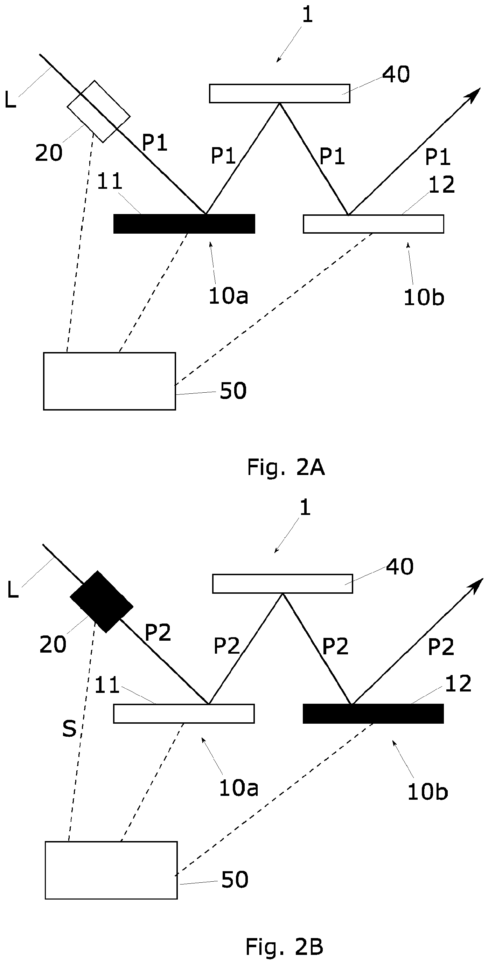

**Fig. 2** illustrates a second embodiment of the invention, which differs from the first embodiment (see Fig. 1) in that the first active area 11 is provided by a first wavefront modulator 10a and the second active area 12 is provided by a second wavefront modulator 10b. Fig. 2A and Fig. 2B show different configurations of the light modulating device 1.

Therefore, the first active area 11 and the second active area 12 can be easily set to different, particularly orthogonal, polarization sensitivities. According to the example shown in Fig. 2, the first active area 11 is configured to modulate the wavefront of a light beam L polarized in the first polarization direction P1 and the second active area 12 is configured to modulate the wavefront of a light beam L polarized in the second polarization direction P2. Thus, the polarization modifying element 30 shown in Fig. 1 may be omitted in the embodiment according to Fig. 2 as explained below.

In the situation depicted in **Fig. 2A****,** the light beam L is not rotated by the first polarization switching element 20 and is thus polarized in the first polarization direction P1 when it reaches the first active area 11. Accordingly, the wavefront light beam L is modulated by the first active area 11.

After being diffracted by the first active area 11, the light beam L is reflected onto the second active area 12 by the reflective element 40 which is not attached to a polarization modifying element 30 in contrast to the embodiment shown in Fig. 1.

When reaching the second active area 12, the light beam L is still polarized in the first polarization direction P1. Since the preferential direction of the second active area 12 is the second polarization direction P2 which is orthogonal to the first polarization direction P1, the second active area does not modulate the wavefront of the light beam L.

By providing a switching signal S to the polarization switching element 20 (see **Fig. 2B**), the polarization of the light beam L is rotated to the second polarization direction P2 and the situation is reversed: The wavefront of the light beam L is not affected by the first active area 11 but is modulated by the second active area 12.

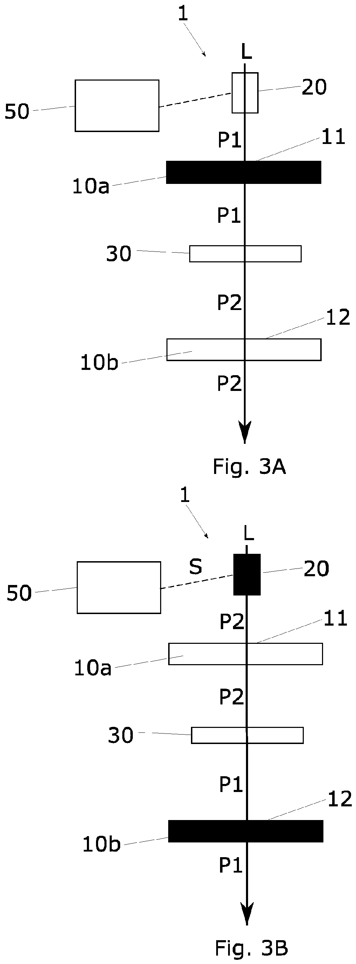

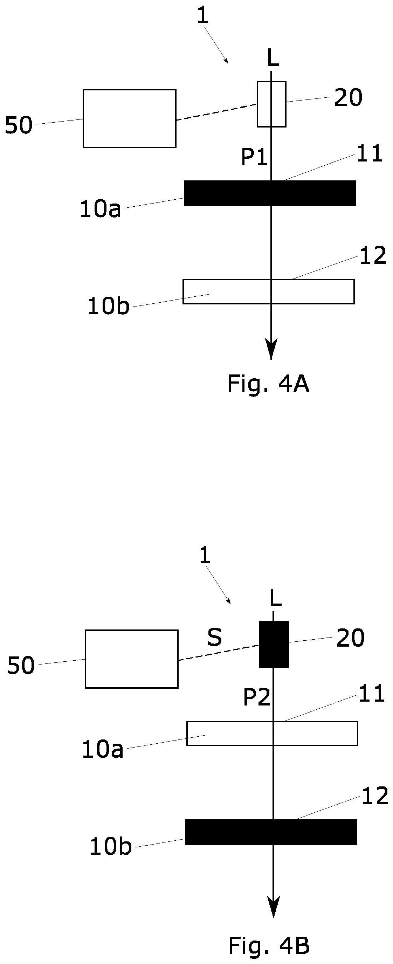

In Fig. 2, as well as in Fig. 3 and Fig. 4 described below, the first polarization switching element 20 in the activated state and the first and second active areas 11,12 modulating the wavefront of the light beam L are highlighted in black.

**Fig. 3** and **Fig. 4** illustrate further embodiments of the light modulation device 1 according to the invention, in which the first active area 11 and the second active area 12 are comprised in a first and a second transmissive wavefront modulator 10a, 10b.

According to the embodiment depicted in Fig. 3, the first active area 11 and the second active area 12 have the same polarization sensitivity in the first polarization direction P1, and a polarization modifying element 30, e.g., a λ/2 plate, is arranged between the first wavefront modulator 10a and the second wavefront modulator 10b to rotate the polarization of the light beam L from the first polarization direction P1 to the second polarization direction P2.

Hence, if the polarization switching element 20 is inactive **(****Fig. 3A****),** the first active area 11, but not the second active area 12, modulates the wavefront of the light beam L, and if the polarization switching element 20 is activated by a switching signal S from the control device 50 **(****Fig. 3B****),** the second active area 12, but not the first active area 11 modulates the wavefront of the light beam (L).

In **Fig. 4****,** an analogous setup is shown without the polarization modifying element 30 in the light path between the first active area 11 and the second active area 12. According to this embodiment, the first active area 11 selectively modulates the wavefront of a light beam L polarized in the first polarization direction P1 and the second active area 12 selectively modulates the wavefront of a light beam L polarized in the second polarization direction P2.

Hence, as shown in Fig. 4A, the light beam L is wavefront-modulated by the first active area 11 in the inactive state of the polarization switching element 20 **(****Fig. 4A****)** and the light beam L is wavefront-modulated by the second active area 12 in the activated state of the polarization switching element 20 **(****Fig. 4B****).**

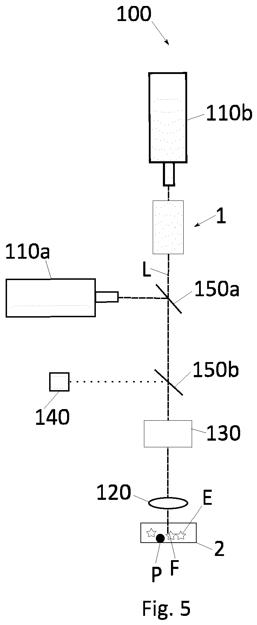

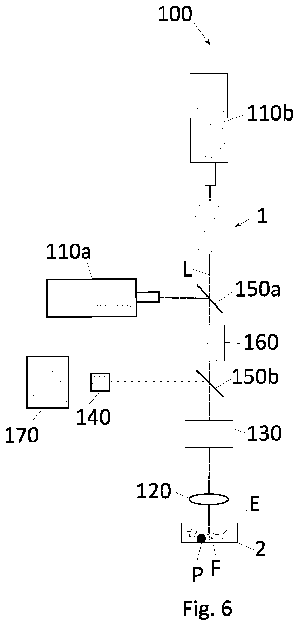

**Fig. 5** and **Fig. 6** show generalized examples of microscopes 100 according to the invention incorporating a light modulation device 1 according to the invention. In particular, the microscope 100 shown in Fig. 5 may be a STED microscope or a RESOLFT microscope, and the microscope 100 depicted in Fig. 6 may be a MINFLUX microscope.

The microscope 100 shown in Fig. 5 comprises a first light source 110a and an optional second light source 110b generating a light beam L coupled into a common beam path by a first beam splitter 150a. A polarizer may be provided to linearly polarize the light beam L (not shown).

The light beam L is then wavefront-modulated by a light modulation device 1 according to the invention (depicted highly schematically, see Fig. 1 to 4 for details) in the beam path of the microscope 100, as described above.

Subsequently, the wavefront-modulated light beam L is passed through a second beam splitter 150b (e.g., a dichroic mirror) and via a scanner 130 (e.g., a galvanometric scanner) into an objective lens 120, which generates a focus F of the light beam L in a sample 2 containing particles P and/or emitters E (e.g., fluorophores). The focus F of the light beam L is scanned through or over the sample by the scanner 130.

The first light source 110a may generate excitation light capable of exciting the emitters E in the sample, such that they emit luminescence, particularly fluorescence light. This light is picked up by the objective lens 120, separated, particularly in a wavelength-dependent manner, from the excitation light by the second beam splitter 150b and detected by a detector 140 (particularly a confocal point detector or array detector, optional confocal pinhole not shown).

The optional second light source 110b may generate, e.g., STED light used to de-excite the emitters E outside of a central narrow region of the focus F for improving the resolution of the microscope 100 beyond the diffraction limit.

In particular, the light modulation device 1 may be used to shape the focus F of the STED light beam into a light intensity distribution with a (central) local minimum, such as e.g., a 2D donut or a 3D donut (bottle beam). More particularly, fast switching between different STED beam shapes (such as a 2D donut and a 3D donut) may be mediated by sending a switching signal S to the control device 50 of the light modulation device 1 as described above and illustrated in Fig. 1 to 4.

Another possible application of the light modulation device 1 is fast switching between a regular STED donut and a donut with additional light intensity at the minimum, which can be used for background correction.

Yet alternatively, the light modulation device 1 may be used in the microscope 100 to shift an axial position of the focus F of the excitation light and/or the STED light between two pre-defined positions (by introducing a defocus on at least one of the active areas of the wavefront modulator(s)). This may be used in combination with the scanner 130 for 3D scanning of the sample 2.

**Fig. 6** shows a microscope 100 which is specifically adapted for MINFLUX or STED-MINFLUX microscopy. Components described above are labeled with the same reference signs as in Fig. 5. The second light source 110b is optional and may generate additional STED light, e.g., to move a STED light distribution comprising a minimum over or through the sample in a pattern while detecting light intensities or photon counts of the light emitted by a single fluorophore (a method designated herein as 'STED-MINFLUX'), or to provide an envelope of STED light to reduce background emission, while the excitation light distribution with a local minimum is moved over or through the sample in a pattern while detecting photon counts or emission light intensities (MINFLUX in a STED envelope).

In addition to the components depicted in Fig. 5, the microscope 100 comprises a deflection device 160 (e.g., an electro optic deflector) configured to move the excitation light distribution and/or the STED light laterally over or through the sample 2 in a pattern to localize a single emitter E, and a processing device 170 configured to determine a position estimate of the localized emitter E based on the photon counts/detection light intensities and the corresponding positions of the excitation light distribution and/or STED light distribution.

The light modulation device 1 may be used, e.g., to switch between different shapes of the excitation light or STED light focus. To this end, the light modulation device may be arranged either in the beam path of the first light source 110a, the second light source 110b (as depicted in Fig. 6) or in the common beam path of the first light source 110a and the second light source 110b, i.e., after the first beam splitter 150a.

One possible application of the light modulation device 1 is fast switching between a Gaussian shaped excitation focus for lower-accuracy pre-localization of the emitter E and a 2D donut or 3D donut of the excitation light for high-accuracy MINFLUX localization of the pre-localized emitter E. This is possible without the optional second light source 110b configured to generate STED light.

Another possibility is fast switching between STED light envelopes of different broadness (i.e., different steepness of the intensity increase flanking the central intensity minimum) to adapt the background reduction to the MINFLUX sequence which is executed in parallel using the excitation light distribution.

### List of reference signs

- 1: Light modulation device
- 2: Sample
- 10: Wavefront modulator
- 10a: First wavefront modulator
- 10b: Second wavefront modulator
- 11: First active area
- 12: Second active area
- 20: First polarization switching element
- 30: Polarization modifying element
- 40: Reflective element
- 50: Control device
- 60: Second polarization switching element
- 100: Microscope
- 110: Light source
- 110a: First light source
- 110b: Second light source
- 120: Objective lens
- 130: Scanner
- 140: Detector
- 150a: First beam splitter
- 150b: Second beam splitter
- 160: Deflection device
- 170: Processing device
- E: Emitter
- F: Focus
- P: Particle
- L: Light beam
- P1: First polarization direction
- P2: Second polarization direction
- S: Switching signal

## Claims

1. A light modulation device (1) for a microscope (100) comprising a first active area (11) of a wavefront modulator (10,10a) and a second active area (12) of a wavefront modulator (10, 10b), wherein the first active area (11) and the second active area (12) are configured to modulate a wavefront of a light beam (L), particularly a linearly polarized light beam (L), dependent on a polarization of the light beam (L), wherein a light path, along which the light beam (L) propagates, intersects the first active area (11) and the second active area (12),
**characterized in that**
the light modulation device (1) comprises a first polarization switching element (20) configured to rotate the polarization of the light beam (L) between a first polarization direction (P1) and a second polarization direction (P2) upon receiving a switching signal (S) to selectively modulate the wavefront of the light beam (L) by the first active area (11) and/or the second active area (12).

2. The light modulation device (1) according to claim 1, **characterized in that** the first active area (11) is configured to modulate the wavefront of the light beam (L) if the light beam (L) is polarized in the first polarization direction (P1) and the second active area (12) is configured to modulate the wavefront of the light beam (L) if the light beam (L) is polarized in the second polarization direction (P2).

3. The light modulation device (1) according to claim 1, **characterized in that** the light modulation device (1) comprises a polarization modifying element (30) configured to rotate the polarization of the light beam (L), particularly by 90°, wherein the polarization modifying element (30) is arranged in the light path between the first active area (11) and the second active area (12), wherein particularly the polarization modifying element (30) is configured to rotate the polarization of the light beam (L) in a wavelength dependent manner.

4. The light modulation device (1) according to claim 3, **characterized in that** both the first active area (11) and the second active area (12) are configured to modulate the wavefront of the light beam (L) if the light beam (L) is polarized in the first polarization direction (P1) or both the first active area (11) and the second active area (12) are configured to modulate the wavefront of the light beam (L) if the light beam (L) is polarized in the second polarization direction (P2), wherein particularly the first active area (11) and the second active area (12) are jointly formed by a single wavefront modulator (10).

5. The light modulation device (1) according to one of the preceding claims, **characterized in that** the light modulation device (1) comprises a second polarization switching element (60) configured to rotate the polarization of the light beam (60) between the second polarization direction (P2) and the first polarization direction (P1) after the wavefront of the light beam (L) has been modulated by the first active area (11) and the second active area (12).

6. The light modulation device (1) according to one of the preceding claims, **characterized in that** the first polarization switching element (20) and/or the second polarization switching element (60) comprises a switching rate of at least 1 kHz, particularly at least 2 kHz, more particularly at least 5 kHz.

7. The light modulation device (1) according to one of the preceding claims, **characterized in that** the first active area (11) is configured to display a first modulation pattern and the second active area (12) is configured to display a second modulation pattern, wherein particularly the light modulation device (1) comprises a control device (50) configured to control the first active area (11) and the second active area (12), such that the first active area (11) displays the first modulation pattern and the second active area (12) displays the second modulation pattern.

8. The light modulation device (1) according to claim 7, **characterized in that** the first modulation pattern and the second modulation pattern are adapted to adjust an axial position of a focus (F) of the light beam (L).

9. The light modulation device (1) according to claim 7, **characterized in that** the first modulation pattern and the second modulation pattern are adapted such that the wavefront of the light beam (L) is modulated in an identical fashion regardless of the polarization of the light beam (L).

10. The light modulation device (1) according to claim 7, **characterized in that** the first modulation pattern is adapted to generate a light distribution comprising a local intensity maximum at a focus (F) of the light beam, and the second modulation pattern is adapted to generate a light distribution comprising a local intensity minimum at the focus (F).

11. The light modulation device (1) according to claim 7, **characterized in that** the first modulation pattern is adapted to generate a first light distribution, and the second modulation pattern is adapted to generate a second light distribution, wherein both the first light distribution and the second light distribution comprise a local minimum at a focus (F) of the light beam, wherein the first light distribution is different from the second light distribution.

12. The light modulation device (1) according to claim 11, **characterized in that** the first light distribution and the second light distribution each comprise a low-intensity region including and/or surrounding the local intensity minimum, wherein a light intensity is below a threshold value in the low-intensity region, and wherein a volume of the low-intensity region of the first light distribution is different, particularly by 10 % or more, from the volume of the low-intensity region of the second light distribution.

13. The light modulation device (1) according to claim 11, **characterized in that** the at least one of the first light distribution and the second light distribution comprises additional light intensity at the local minimum.

14. A microscope (100) comprising a light modulation device (1) according to one of the claims 1 to 13.

15. A method for modulating a light beam (L) for microscopy, particularly using the light modulation device (1) according to one of the claims 1 to 13 and/or the microscope (100) according to claim 14, wherein
a. a light beam (L), particularly a linearly polarized light beam, is provided
b. the light beam (L) is directed along a light path intersecting a first active area (11) of a wavefront modulator (10,10a) and a second active area (12) of a wavefront modulator (10,10b), wherein the first active area (11) and the second active area (12) are configured to modulate a wavefront of the light beam (L) dependent on a polarization of the light beam (L),
**characterized in that**
the polarization of the light beam (L) is rotated between a first polarization direction (P1) and a second polarization direction (P2) upon receiving a switching signal (S) to selectively modulate the wavefront of the light beam (L) by the first active area (11) and/or the second active area (12).
